# EUROPEAN PATENT APPLICATION

(11) **EP 4 265 092 A1**
(43) Date of publication of application: **25.10.2023**
(21) Application number: 23166907.8
(22) Date of filing: 06.04.2023
(51) Int. Cl.: A01B 69/04, G05D 1/02, A01B 63/10

(54) **WORK METHOD, WORK VEHICLE AND WORK SYSTEM**

(30) Priority: 13.04.2022 JP 2022066271
(71) Applicant: Yanmar Holdings Co., Ltd., Osaka-shi, Osaka (JP)
(72) Inventor: UENO, So, Okayama (JP); MIWA, Toshiyuki, Okayama (JP)
(74) Representative: Novagraaf International SA

(57) **Abstract**

[Problem] To provide a work method, a work vehicle, and a work system capable of acquiring the finish level of work performed in a field, and presenting the finish level to an operator.

[Solution] A tractor 1, which is a work vehicle, includes a control device 13. The control device 13 operates as a travel control unit 45 and a work control unit 46 that perform work travel in a field, and a finish detection unit 47 (detection unit) that detects a finish level of the work at each work position in the field after performing the work travel.

## Description

### TECHNICAL FIELD

The present invention relates to a work method for performing work travel of a work vehicle, a work vehicle, and a work system.

### BACKGROUND ART

A work vehicle such as a tractor is configured to perform work travel, in which work is performed by a work machine while traveling in a field. When a work vehicle performs work by controlling a work machine, a finish level of the work needs to match the needs of an operator.

For example, the tractor disclosed in Patent Document 1 includes a control device that receives information indicating that the work machine is in a retracted state, and permits travel outside a field when the work machine is in a raised position. This tractor includes a plowing harrow as the work machine, and the work machine is provided with a tillage cover. A tillage rotating shaft to which a plurality of tillage claws are connected is rotatably attached to the tillage cover, and a leveling plate is rotatably arranged behind the tillage cover, and is downwardly biased to flatten the field surface. Furthermore, the work machine is provided with a leveling plate rotation angle sensor. The leveling plate rotation angle sensor detects the rotation angle of the leveling plate, and is capable of acquiring information about the size of the soil clods remaining on the field after tillage based on the magnitude and frequency of rotation of the leveling plate rotation angle sensor.

### PRIOR ART DOCUMENT

### PATENT DOCUMENT

Patent Document 1: Japanese Unexamined Patent Application Publication No. 2020-156389

### SUMMARY OF INVENTION

### TECHNICAL PROBLEM

The conventional work vehicle acquires information about the size of the soil clods remaining on the field after tillage. However, it is unable to acquire a finish level of the work at each work position in the field, and also cannot present an operator with the finish level.

An object of the present invention is to provide, a work method, a work vehicle, and a work system that are capable of acquiring the finish level of the work performed in a field, and presenting the finishing level to an operator.

### SOLUTION TO PROBLEM

In order to solve the problem described above, a work method of the present invention is a work method of a work vehicle, including: a work travel step for causing the work vehicle to perform work travel in a field; and a detection step for detecting a finish level of work at each work position in the field after performing the work travel.

Furthermore, in order to solve the problem described above, a work vehicle of the present invention includes: a travel control unit and a work control unit that perform work travel in a field; and a detection unit that detects a finish level of work at each work position in the field after performing the work travel.

Moreover, in order to solve the problem described above, a work system of the present invention includes: a travel control unit and a work control unit that perform work travel in a field; and a detection unit that detects a finish level of work at each work position in the field after performing the work travel.

### ADVANTAGEOUS EFFECTS OF INVENTION

According to the present invention, a work method, a work vehicle, and a work system are provided that are capable of acquiring the finish level of the work performed in a field, and presenting the finish level to an operator.

### BRIEF DESCRIPTION OF DRAWINGS

FIG. 1 is a side view of a tractor according to an embodiment of the present invention.
FIG. 2 is a rear view of a tractor according to an embodiment of the present invention.
FIG. 3 is a block diagram a tractor according to an embodiment of the present invention.
FIG. 4 is a plan view showing an example of a finish confirmation screen displayed on a display device of a tractor according to an embodiment of the present invention in a case where work is performed in a central region.
FIG. 5 is a plan view showing an example of a finish confirmation screen displayed on a display device of a tractor according to an embodiment of the present invention in a case where the finish level has been detected.
FIG. 6 is a plan view showing an example of a finish confirmation screen displayed on a display device of a tractor according to an embodiment of the present invention in a case where work is performed for a second time.
FIG. 7 is a plan view showing an example of a finish confirmation screen displayed on a display device of a tractor according to an embodiment of the present invention in a case where an autonomous travel route is set the second time.
FIG. 8 is a plan view showing an example of a work screen displayed on a mobile terminal of a tractor according to an embodiment of the present invention.

### DESCRIPTION OF EMBODIMENTS

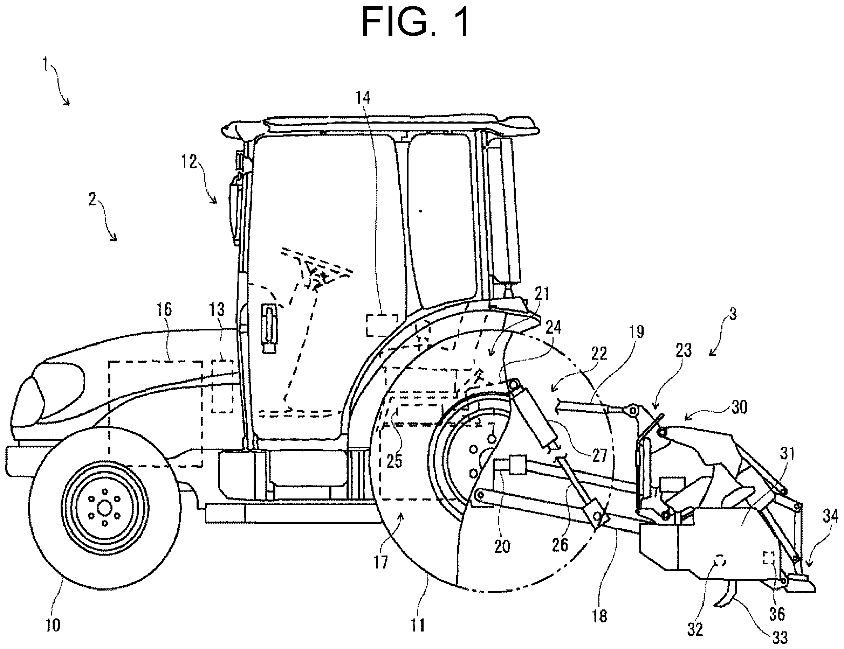

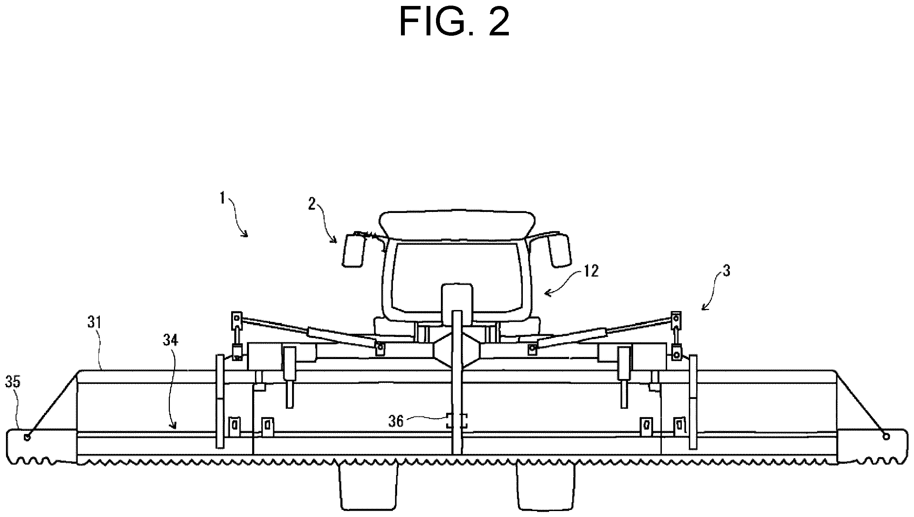

A work vehicle of the present invention performs work travel in which work is performed by a work machine while traveling in a field. A tractor 1, which is an embodiment of a work vehicle of the present invention, will be described with reference to the drawings. As shown in FIG. 1 and FIG. 2, the tractor 1 includes a vehicle body 2 and a work machine 3, and is configured to travel due to the vehicle body 2 while the work machine 3 performs work such as plowing. In the tractor 1, the work machine 3 such as a rotary, harrow, loader, plow, or box scraper that performs various types of work is mounted as necessary on the vehicle body 2. In the present embodiment, as shown in FIG. 1 and FIG. 2, an example will be described in which a plowing harrow is mounted on the vehicle body 2 as the work machine 3.

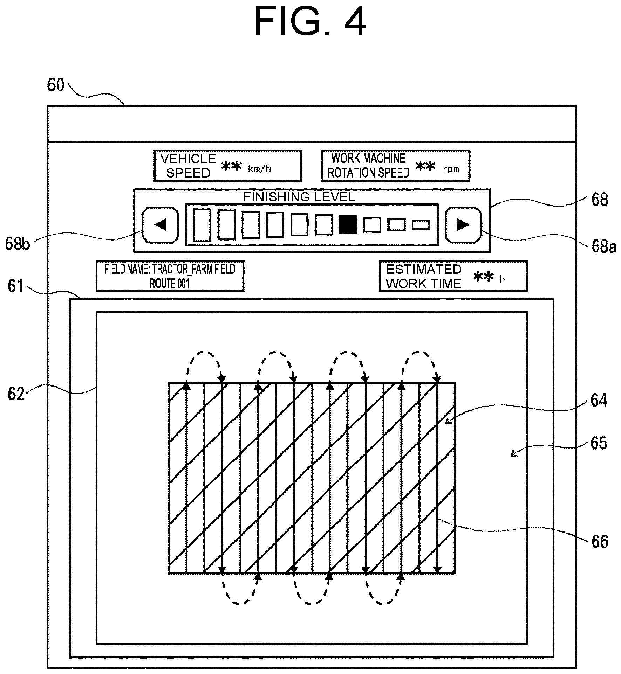

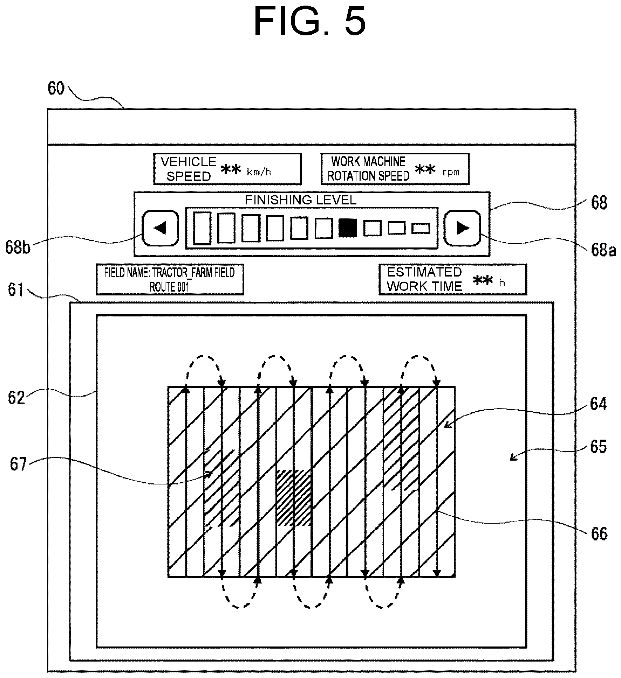

The tractor 1 has a travel mode which is set to either a manual travel mode or an autonomous travel mode. When the manual travel mode is set, the tractor 1 performs manual travel according to the operations of various operation tools (a steering wheel, an accelerator pedal, and a shift lever) performed by an operator. When the autonomous travel mode is set, the tractor 1 controls the vehicle speed, the steering, and the like using a control device 13 so as to autonomously travel along an autonomous travel route 66 that has been set (see FIG. 4 and FIG. 5). For example, when the tractor 1 travels autonomously and performs work in a field, the tractor 1 is firstly made to travel for one lap along the outer periphery of the field by manual travel or the like to acquire information about the external shape of the field. Furthermore, based on the acquired information, the tractor 1 performs work while traveling autonomously in a central region of the field. Then, the tractor 1 performs work while traveling autonomously so as to circulate from the outside of the central region toward the outer periphery of the field. Then, when the work is completed in all regions of the field, the tractor 1 leaves the field.

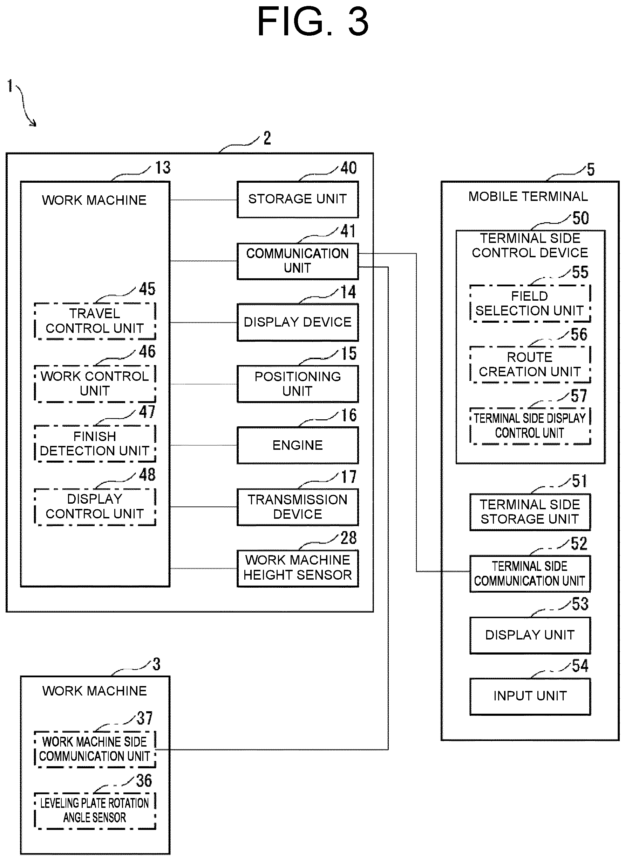

A pair of left and right front wheels 10 is provided on the lower front portion of the vehicle body 2. A pair of left and right rear wheels 11 is provided on the lower rear portion of the vehicle body 2. A cabin 12 for an operator to board is provided on the upper portion of the vehicle body 2. A driver's seat and various operating tools are provided inside the cabin 12. Furthermore, the vehicle body 2 is provided with a control device 13, a display device 14, and a positioning unit 15 (see FIG. 3). The display device 14 includes a touch panel, a monitor, or the like, and is arranged inside the cabin 12. An engine 16 is built into the front portion of the vehicle body 2. A transmission device 17 is provided between the pair of left and right rear wheels 11. The power of the engine 16 is changed by the transmission device 17 and is transmitted to the front wheels 10 and the rear wheels 11.

A pair of left and right lower links 18, a top link 19, and a PTO shaft 20 are connected to the rear portion of the transmission device 17. The lower links 18, the top link 19, and the PTO shaft 20 are arranged so as to extend backward. The work machine 3 is connected to the rear ends of the lower links 18, the top link 19, and the PTO shaft 20, and is driven by the PTO shaft 20.

The rear portion of the vehicle body 2 is provided with a work machine lifting mechanism 21, a work machine angle changing mechanism 22, and a joint member 23.

The work machine lifting mechanism 21 includes a pair of left and right lift arms 24 and a lift cylinder (work machine lifting portion) 25 configured by a hydraulic cylinder. The front end portion of one lift arm 24 is joined to one lower link 18 via a link member 26. The front end portion of the other lift arm 24 is joined to the other lower link 18 via a rolling cylinder 27. The work machine lifting mechanism 21 is capable of changing the height of the work machine 3 supported by the vehicle body 2 by driving the lift cylinder 25. The vehicle body 2 includes a work machine height sensor 28 (see FIG. 3) that detects the height of the work machine 3. The work machine height sensor 28 is configured by a sensor that, for example, detects the position of the cylinder rod of the lift cylinder 25 (the length of the lift cylinder 25).

The work machine angle changing mechanism 22 includes a rolling cylinder 27 configured by a hydraulic cylinder. As described above, the rolling cylinder 27 is configured so as to join the other lift arm 24 and the other lower link 18. As a result of driving the rolling cylinder 27, the work machine angle changing mechanism 22 is capable of changing the tilt posture in the left-right direction of the work machine 3, which is supported by the vehicle body 2.

The joint member 23 is configured so as to join the lower link 18, the top link 19, and the work machine 3.

The work machine 3 is configured by a plowing harrow that performs plowing work for crushing soil clods and flattening the surface of a rice paddy (field) filled with water. As shown in FIG. 1, the work machine 3 includes a joint portion 30 for joining the work machine 3 to the joint member 23 of the vehicle body 2. The joint portion 30 may be configured so as to join the lower link 18, the top link 19, and the work machine 3 without the joint member 23 between them.

A tillage cover 31 extending in the left-right direction is provided behind the joint portion 30. A tillage rotating shaft 32 having a rotating shaft extending in the left-right direction is rotatably attached to the tillage cover 31. The tillage rotating shaft 32 is rotated by the power transmitted from the PTO shaft 20. A plurality of tillage claws 33 are provided on the tillage rotating shaft 32, which are provided spaced apart in the left-right direction. As a result of the tillage rotating shaft 32 and the tillage claws 33 rotating together to till the soil of the rice paddy (field), the soil clods of the rice paddy can be crushed.

A leveling plate 34 extending in the left-right direction is provided on the lower rear portion of the tillage cover 31. The leveling plate 34 has a rotating shaft extending in the left-right direction, and is rotatably attached to the tillage cover 31. The leveling plate 34 is downwardly biased and pressurized by a biasing member such as a hydraulic cylinder or an electric motor, and is capable of flattening the field surface by making contact with the soil surface of the rice paddy (field). An extended leveling plate 35 (see FIG. 2) that widens the leveling width may be provided outside the leveling plate 34 in the left-right direction.

Furthermore, the work machine 3 is provided with a leveling plate rotation angle sensor 36. The leveling plate rotation angle sensor 36 detects the rotation angle of the leveling plate 34 in the up-down direction during leveling, and is configured, for example, by a potentiometer that detects the rotation angle of the leveling plate 34 or the rotation angle of a link attached to the rotating shaft of the leveling plate 34.

In the plowing work, when the soil clods remaining after tillage are large, the leveling plate 34 rotates in a large up and down motion. On the other hand, when the soil clods remaining after tillage are small, the leveling plate 34 rotates in a small up and down motion. Therefore, by detecting the size and frequency of the rotation of the leveling plate 34 using the leveling plate rotation angle sensor 36, it is possible to acquire the size of the soil clods remaining in the field after tillage. As a result, it is possible to detect the finish level of the plowing work at each work position in the field. Note that the finish level represents the state of the soil, which is a work result of the work travel that has already been performed. Furthermore, the finishing level differs from the finish level, and represents the state of the soil that is planned as a work result of the work travel to be performed from now on.

The positioning unit 15 is configured to acquire position information (positioning point) of the tractor 1 using a satellite positioning system such as a GNSS. The positioning unit 15 receives a positioning signal from a positioning satellite via a positioning antenna, and acquires position information of the positioning unit 15, that is, position information of the tractor 1 based on the positioning signal.

Next, the control device 13 will be described. The control device 13 is configured by a computer such as a CPU, and as shown in FIG. 3, is connected to a storage unit 40 such as a ROM, a RAM, a hard disk drive, or a flash memory, and to a communication unit 41 that communicates with an external instrument.

The storage unit 40 stores a program and data for controlling various components and various functions of the tractor 1. As a result of the control device 13 executing arithmetic processing based on the program and the data stored in the storage unit 40, the various components and the various functions are controlled. The control device 13 acquires, for example, an own vehicle position of the tractor 1 from the positioning unit 15.

Furthermore, the storage unit 40 stores field information and an autonomous travel route 66 of a field, which is the work target of the tractor 1. The control device 13 receives the field information and the autonomous travel route 66 from a mobile terminal 5 via the communication unit 41, and stores them in the storage unit 40. The field information includes, for example, information such as the shape, size, and position information (coordinates and the like) of the field outline, the shape, size, and position information (coordinates and the like) of an unworked region 65 in the field in which work travel has not yet been performed (see FIG. 4 to FIG. 7), and an already-worked region 64 in the field in which work travel has already been performed (see FIG. 4 to FIG. 7).

Moreover, the storage unit 40 stores the finish level of the work (plowing work) at each work location in the already-worked region 64. The tractor 1 sometimes performs work travel in the field multiple times, and the storage unit 40 may store the finish level of the work travel each time, and at least stores the finish level of the previous work travel. In addition, the tractor 1 sometimes performs work travel in the field each year or each season, and the storage unit 40 may store the finish level of the work travel each year or each season, and at least stores the finish level of the work travel performed last year or last season.

The communication unit 41 has a function that performs communication processing with a work machine side communication unit 37 (see FIG. 3) provided in the work machine 3 through wired communication or wireless communication. Furthermore, the communication unit 41 has a function that performs communication processing with an external device, such as the mobile terminal 5 held by an operator, through wireless communication. The control device 13 controls the communication unit 41 to communicate with the work machine 3 and the mobile terminal 5, and transmits and receives various information to and from the work machine 3 and the mobile terminal 5.

The control device 13 is connected to various sensors provided in the vehicle body 2 to input the detection results of the various sensors, and also inputs the detection results of the various sensors provided in the work machine 3 via the communication unit 41. For example, the control device 13 inputs the height of the work machine 3 (that is, the work machine height) as the detection result of the work machine height sensor 28 provided in the vehicle body 2. Furthermore, the control device 13 inputs the rotation angle of the leveling plate 34 (that is, the leveling plate rotation angle) as the detection result of the leveling plate rotation angle sensor 36 provided in the work machine 3.

As a result of executing the program stored in the storage unit 40, the control device 13 operates as a travel control unit 45, a work control unit 46, a finish detection unit 47 (detection unit), and a display control unit 48. Note that, in the work method according to the present invention, the travel control unit 45 and the work control unit 46 realize the work travel step and the autonomous travel step in which work travel is performed by the tractor 1 (work vehicle). Furthermore, the finish detection unit 47 realizes the detection step of the work method according to the present invention. Also, the display control unit 48 realizes the display step of the work method according to the present invention.

The travel control unit 45 controls the travel of the tractor 1. For example, when the manual travel mode is set, the travel control unit 45 controls the engine 16, the transmission device 17, and the steering device (not illustrated) according to the operation of various operation tools provided in the cabin 12. As a result, the vehicle speed and steering of the tractor 1 are controlled.

Furthermore, when the autonomous travel mode is set, the travel control unit 45 acquires the autonomous travel route 66 set with respect to the field from the mobile terminal 5 or the like, and acquires the own vehicle position of the tractor 1 from the positioning unit 15. Then, based on the own vehicle position and the autonomous travel route 66, the travel control unit 45 controls the steering of the tractor 1 such that the tractor 1 performs autonomous travel along the autonomous travel route 66. In addition, the travel control unit 45 controls the engine 16 and the transmission device 17 to achieve a preset autonomous travel speed.

When the manual travel mode is set, the work control unit 46 controls the work machine 3 according to the operation of various operation tools provided in the cabin 12 to perform the plowing work by the work machine 3 with respect to the field. Moreover, when the autonomous travel mode is set, the work control unit 46 controls the work machine 3 according to a preset work setting to perform the plowing work by the work machine 3 with respect to the field.

For example, the work control unit 46 controls a solenoid valve provided between the lift cylinder 25 and the hydraulic pump of the transmission device 17 to control the lift cylinder 25, which performs a control that changes the height of the work machine 3 (work machine height) supported by the vehicle body 2. The work control unit 46, for example, is capable of changing the work machine height between a lowered position, which is the height when work is performed with respect to the field, and a raised position, which is higher than the lower position and is the height during travel. Furthermore, the work control unit 46 controls a solenoid valve provided between the rolling cylinder 27 and the hydraulic pump of the transmission device 17 to control the rolling cylinder 27, which enables the tilt posture in the left-right direction of the work machine 3, which is supported by the vehicle body 2, to be changed. In addition, the work control unit 46 controls the rotation speed (rotational velocity) of the PTO shaft 20, which enables the rotation speed (rotational velocity) of the tillage rotating shaft 32 and the plurality of tillage claws 33 to be changed.

Specifically, in the present embodiment, the travel control unit 45 and the work control unit 46 may be controlled to set the vehicle speed of the tractor 1 and the rotation speed of the work machine 3 according to a finishing level set on a finish confirmation screen 60 (see FIG. 4) and the like described later. Here, the rotation speed of the work machine 3 may be the rotation speed (rotational velocity) of the PTO shaft 20, that is, the rotation speed (rotational velocity) of the tillage rotating shaft 32 and the plurality of tillage claws 33 that perform work with respect to the soil. The travel control unit 45 controls the travel according to a vehicle speed setting of the tractor 1, which is set according to the finishing level. The work control unit 46 controls the work according to a rotation speed setting of the work machine 3, which is set according to the finishing level.

For example, the more the finishing level of the plowing work is set such that the soil clods become coarser, the more the vehicle speed setting of the tractor 1 is increased and the rotation speed setting of the work machine 3 is decreased. On the other hand, the more the finishing level of the plowing work is set such that the soil clods become finer, the more the vehicle speed setting of the tractor 1 is decreased and the rotation speed setting of the work machine 3 is increased. Note that a plurality of levels of vehicle speed settings and a plurality of levels of rotation speed settings are preset based on a plurality of finishing levels. Further, a vehicle speed setting and a rotation speed setting corresponding to the finishing level that has been set may be applied. In addition, although the finishing level may be adjusted by adjusting both the vehicle speed setting and the rotation speed setting as described above, the finishing level may be adjusted by adjusting only one of the vehicle speed setting and the rotation speed setting.

Furthermore, when the tractor 1 is performing work travel in the manual travel mode or the autonomous travel mode, the travel control unit 45 and the work control unit 46 may, based on a finish level detected by the finish detection unit 47 described later, perform a control that changes vehicle speed of the tractor 1 and the rotation speed of the work machine 3. For example, when the finish level of the plowing work indicates that the soil clods are coarse (larger than the target size of the soil clods), the travel control unit 45 decreases the vehicle speed of the tractor 1 and the work control unit 46 performs a control that increases the rotation speed of the work machine 3 in order to make the soil clods finer. On the other hand, when the finish level of the plowing work indicates that the soil clods are fine (smaller than the target size of the soil clods), the travel control unit 45 increases the vehicle speed of the tractor 1 and the work control unit 46 performs a control that decreases the rotation speed of the work machine 3 or stops the work machine 3 in order to prevent the soil clods from becoming excessively fine. Note that, although the finishing level may be adjusted by adjusting both the vehicle speed and the rotation speed as described above, the finishing level may be adjusted by adjusting only one of the vehicle speed and the rotation speed.

Alternatively, when the tractor 1 performs work travel in the autonomous travel mode, the travel control unit 45 and the work control unit 46 may, based on the finish level at each work position in the field detected by the finish detection unit 47 when performing the previous work, perform a control that sets the vehicle speed of the tractor 1 and the rotation speed of the work machine 3 at the work positions in the current work. The travel control unit 45 controls the travel in the work positions according to a vehicle speed setting of the tractor 1, which is set according to the finish level. The work control unit 46 controls the work according to a rotation speed setting of the work machine 3, which is set according to the finish level.

For example, when the finish level of the plowing work indicates a work position with coarse soil clods (a work position with a larger soil clod size than the target size), the vehicle speed setting of the tractor 1 is decreased and the rotation speed setting of the work machine 3 is increased. On the other hand, when the finish level of the plowing work indicates a work position with fine soil clods (a work position with a smaller soil clod size than the target size), the vehicle speed setting of the tractor 1 is increased and the rotation speed setting of the work machine 3 is decreased. Note that a plurality of levels of vehicle speed settings and a plurality of levels of rotation speed settings are preset based on a plurality of finish levels. A vehicle speed setting and a rotation speed setting corresponding to the detected finish level may be applied. In this case, although the finishing level may be adjusted by adjusting both the vehicle speed setting and the rotation speed setting as described above, the finishing level may be adjusted by adjusting only one of the vehicle speed setting and the rotation speed setting.

The finish detection unit 47 detects the finish level of the work at predetermined work positions in which the tractor 1 has performed work travel. The finish detection unit 47 stores the detected finish levels in the storage unit 40 such that they are associated with the work positions in the field, and then transmits them to the mobile terminal 5 via the communication unit 41. Specifically, while the tractor 1 is performing work travel in the manual travel mode or the autonomous travel mode, the finish detection unit 47 acquires the own vehicle position of the tractor 1 from the positioning unit 15, and also acquires the rotation angle of the leveling plate 34 (that is, the leveling plate rotation angle) as the detection result of the leveling plate rotation angle sensor 36 at the own vehicle position. The finish detection unit 47 may determine the size and frequency of the rotation of the leveling plate 34 based on the rotation angle of the leveling plate 34, and determine information about the size of the soil clods at the own vehicle position of the tractor 1 based on the determination result, that is, determine the finish level of the plowing work at the own vehicle position.

For example, when the frequency in which the rotation of the leveling plate 34 becomes large is high, the finish detection unit 47 can determine that there are a large number of large soil clods. Therefore, the finish detection unit 47 can determine that the finish level of the plowing work is coarse. On the other hand, when the frequency in which the rotation of the leveling plate 34 becomes small is high, or the frequency in which the rotation becomes large is low, the finish detection unit 47 can determine that there are a large number of small soil clods. Therefore, the finish detection unit 47 can determine that the finish level of the plowing work is fine. The finish detection unit 47 may preset a plurality of levels of angle thresholds, and may determine the magnitude of the rotation of the leveling plate 34 by comparing the rotation angle of the leveling plate 34, which is the detection result of the leveling plate rotation angle sensor 36, with the angle thresholds. Furthermore, the finish detection unit 47 may, by determining the frequency distribution of the rotation angle of the leveling plate 34 while the own vehicle position of the tractor 1 moves a predetermined distance, determine the frequency in which the rotation of the leveling plate 34 becomes large, and the frequency in which the rotation of the leveling plate 34 becomes small.

The display control unit 48 controls the display device 14 to display various display screens. For example, as shown in FIG. 4, the display control unit 48 displays on the display device 14 a finish confirmation screen 60 for displaying the finish level of the field in which work travel has been performed. The display control unit 48 may display the finish confirmation screen 60 during execution of work travel, or after completion of work travel. FIG. 4 shows a state where the tractor 1 is performing work while traveling autonomously in the central region of the field, and has not yet performed work outside the central region.

The display control unit 48 displays a map panel 61 on the finish confirmation screen 60. In the map panel 61, a field outline 62 based on field information of the field in which the tractor 1 is performing work travel is displayed, and further, an own vehicle indicator of the tractor 1 may be displayed at the own vehicle position of the tractor 1 as positioned by the positioning unit 15. The display control unit 48 displays the already-worked region 64 and the unworked region 65 inside the area of the field outline 62 such that they can be discriminated. In FIG. 4, the already-worked region 64 is indicated by a left-down hatching. When the display control unit 48 displays the finish confirmation screen 60 in the autonomous travel mode, it may display superimposed the autonomous travel route 66 that has been set inside the area of the field outline 62. The display control unit 48 may also display the travel path in which work travel has been performed in the already-worked region 64. The display control unit 48 may also display, with respect to the tractor 1 that is currently performing work travel, the actual vehicle speed and the actual rotation speed of the work machine 3. Furthermore, the vehicle speed setting and the rotation speed setting that have been set may also be displayed.

Moreover, the display control unit 48 displays the finish level detected by the finish detection unit 47 at each own vehicle position of the tractor 1 on the finish confirmation screen 60. For example, as shown in FIG. 5, a finish map (finish distribution) 67 showing the finish level is displayed so as to match the corresponding work positions in the already-worked region 64. Note that, in FIG. 5, the finish map 67 that shows the finish level in the already-worked region 64, in which work travel has been performed, is displayed superimposed on the already-worked region 64. The display control unit 48 displays the finish map 67 by changing the display method such as the background color or gradation according to the finish level such that the finish level can be discriminated. In FIG. 5, the finish level is discriminated by changing the pitch of the hatching, where the smaller the pitch, the lower the finish level. The display control unit 48 updates the position of the own vehicle indicator, the areas of the already-worked region 64 and the unworked region 65, and the area of the finish map 67 according to the progress of the work travel of the tractor 1.

In addition, the display control unit 48 may display on the display device 14 a change instruction of the vehicle speed of the tractor 1 and a change instruction of the rotation speed of the work machine 3 according to the finish level detected by the finish detection unit 47 and prompt an operator for a change operation. For example, if the tractor 1 performs work travel in the manual travel mode, when the vehicle speed setting of the tractor 1 and the rotation speed setting of the work machine 3 corresponding to the finish level is different from the actual vehicle speed of the tractor 1 and the actual rotation speed of the work machine 3, a change instruction may be displayed that recommends the vehicle speed setting and the rotation speed setting. Alternatively, the control device 13 may prompt an operator for a change operation by outputting a change instruction of the vehicle speed and the rotation speed by outputting an audio guidance in addition to, or instead of, a display. Note that a change instruction of both the vehicle speed and the rotation speed may be prompted, but a change instruction of only one of the vehicle speed and the rotation speed may be prompted.

Alternatively, when the finish level of the plowing work indicates that the soil clods are coarse (larger than the target size of the soil clods), a change instruction to decrease the vehicle speed of the tractor 1 or a change instruction to increase the rotation speed of the work machine 3 may be displayed. On the other hand, when the finish level of the plowing work indicates that the soil clods are fine (smaller than the target size of the soil clods), a change instruction to increase the vehicle speed of the tractor 1 or a change instruction to decrease the rotation speed of the work machine 3 or stop the work machine 3 may be displayed. In this case, the control device 13 may prompt an operator for a change operation by outputting a change instruction of the vehicle speed and the rotation speed by outputting an audio guidance in addition to, or instead of, a display. Note that a change instruction of both the vehicle speed and the rotation speed may be prompted, but a change instruction of only one of the vehicle speed and the rotation speed may be prompted.

Moreover, when the tractor 1 performs work travel in the autonomous travel mode, and the travel control unit 45 and the work control unit 46 automatically change the vehicle speed of the tractor 1 and the rotation speed of the work machine 3 according to the finish level, the display control unit 48 may display on the display device 14 a change notification that the vehicle speed of the tractor 1 and the rotation speed of the work machine 3 are being changed, and notify an operator of the change. In this case, the control device 13 may notify an operator with a change notification of the vehicle speed and the rotation speed by outputting an audio guidance in addition to, or instead of, a display. Note that a change notification of both the vehicle speed and the rotation speed may be notified, but a change notification of only one of the vehicle speed and the rotation speed may be notified.

In addition, the tractor 1 sometimes performs work travel in the field multiple times. When work travel has not been performed even once, the entire field is the unworked region 65. After work travel has been performed for the first time, the entire field becomes the already-worked region 64. Further, when the tractor 1 performs the second (current) work travel, the display control unit 48 changes the already-worked region 64 of the first (previous) work travel displayed on the finish confirmation screen 60 into the unworked region 65.

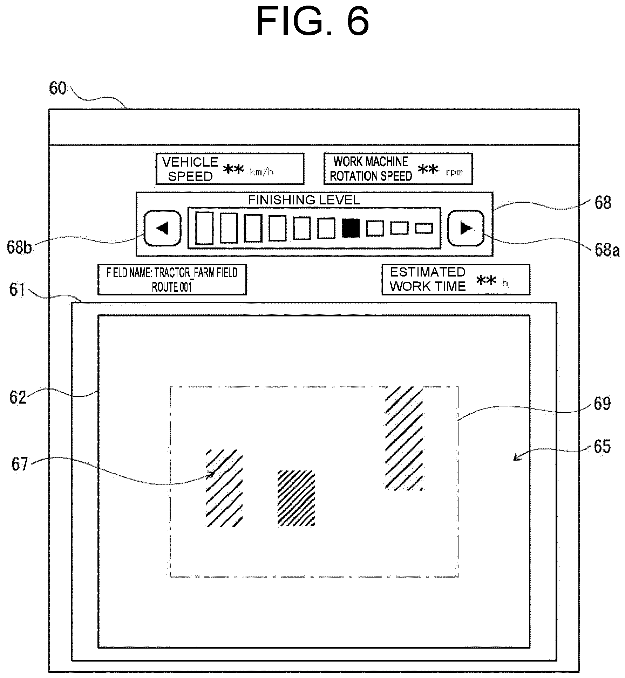

At this time, when the second work travel is started and the entire field becomes the unworked region 65, as shown in FIG. 6, the display control unit 48 may display the finish map 67 of the first work travel superimposed on the unworked region 65 of the second work travel. In FIG. 6, a previous central region 69 in which autonomous travel was performed the first time is shown as a single dotted line. The display control unit 48 may update the unworked region 65 of the second work travel to the already-worked region 64 according to the progress of the second work travel, and may update the finish map 67 of the first work travel to the finish map 67 of the second work travel according to the progress of the second work travel. Furthermore, when the tractor 1 performs a third and subsequent work travel, the display control unit 48 may display the finish confirmation screen 60 in the same manner as described above.

Moreover, for example, the display control unit 48 enables a setting operation of the work setting of the work machine 3 on the finish confirmation screen 60. For example, the display control unit 48 displays the state of the soil that is planned as a work result of the work (plowing work) to be performed by the work machine 3 from now on, that is, the display control unit 48 displays and enables operation of a finishing level setting portion 68 for setting the finishing level. The finishing level setting portion 68 enables the finishing level to be set to one of a plurality of levels. For example, the finishing level setting portion 68 includes an upward adjustment button 68a that raises the finishing level to make the soil clods finer after the work, and a downward adjustment button 68b that lowers the finishing level to make the soil clods coarser. The display control unit 48 may only allow the finishing level setting portion 68 to be operated prior to starting the work travel, or may allow the finishing level setting portion 68 to be operated even during execution of the work travel.

When the finishing level setting portion 68 is setting the finishing level to be applied to the current work travel, the display control unit 48 may display the current finishing level set by the finishing level setting portion 68, and further display the previous finishing level that was applied the previous work travel at the same time. For example, when the tractor 1 performs work travel in the field multiple times, the previous finishing level may be displayed using the immediately preceding work travel as the previous work travel. If work travel has been performed multiple times prior to the current work travel, the finishing level of only the immediately preceding work travel may be displayed as the previous finishing level. However, it is also possible to display the finishing level of each work travel. Moreover, when the tractor 1 performs work travel in the field each year or each season, the previous finishing level may also be displayed using the work travel of the previous year or previous season as the previous work travel. Although the display control unit 48 displays the previous finishing level prior to starting the work travel, it may hide the previous finishing level after starting the work travel. Alternatively, it may be made possible to switch between displaying and hiding the previous finishing level according to an operation by an operator during the work travel.

Furthermore, when the display control unit 48 displays the travel path in which work travel has been performed in the already-worked region 64 of the map panel 61, it may display not only the travel path of the current work travel, but also the travel path of the previous work travel such that they can be discriminated. If work travel has been performed multiple times prior to the current work travel, the travel path of only the immediately preceding work travel may be displayed as the previous travel path. However, it is also possible to display the travel paths of each work travel such that they can be discriminated.

In addition, the finishing level setting portion 68 may preset the previous finishing level as an initial value of the finishing level of the current work travel, and the current finishing level may be changeable according to an operation by an operator. Alternatively, the finishing level setting portion 68 may set an initial value of the finishing level of the current work travel based on a work history of an operator. For example, if it can be determined based on the work history that an operator is prioritizing shortening of the work time, the initial value of the finishing level may be set so as to become coarser.

Moreover, the display control unit 48 may display on the finish confirmation screen 60 a work time required for work travel according to the finishing level set in the finishing level setting portion 68. For example, the display control unit 48 calculates a total distance until completing work travel in the unworked region 65 based on the area of the unworked region 65 and the autonomous travel route 66 set in the unworked region 65, acquires the vehicle speed setting corresponding to the set finishing level, and then calculates the work time based on the total distance and the vehicle speed setting.

Next, the mobile terminal 5 will be described. The mobile terminal 5 is one of the components of the tractor 1, and is a terminal capable of remotely operating the tractor 1. For example, the mobile terminal 5 is configured by a tablet terminal provided with a touch panel, or a laptop personal computer. An operation device equivalent to the mobile terminal 5 may be provided in the cabin 12. In the present invention, a work system is configured by the tractor 1 and the mobile terminal 5.

As shown in FIG. 3, the mobile terminal 5 includes a terminal side control device 50 configured by a computer such as a CPU. The terminal side control device 50 is connected to a terminal side storage unit 51 such as a ROM, a RAM, a hard disk drive, or a flash memory, and to a terminal side communication unit 52 that performs communication with an external instrument. Furthermore, the mobile terminal 5 includes a display unit 53, such as a touch panel or a monitor for displaying various information and outputting the various information to an operator, and also includes an input unit 54 such as a touch panel or an operation key for receiving an input operation of various information from an operator.

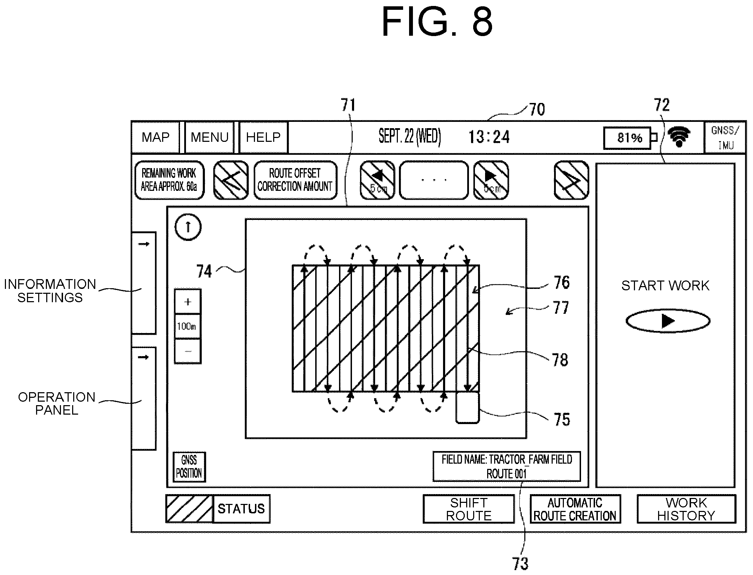

The terminal side storage unit 51 stores a program and data for controlling various components and various functions of the mobile terminal 5. The terminal side control device 50 executes arithmetic processing based on the program and the data stored in the terminal side storage unit 51, so that the various components and the various functions of the mobile terminal 5 are controlled. The terminal side storage unit 51 stores field information about the field, which is the work target of the tractor 1, and an autonomous travel route 78 (see FIG. 8).

The terminal side communication unit 52 is communicatively connected to the communication unit 41 of the tractor 1 via a wireless communication antenna. The terminal side control device 50 controls the terminal side communication unit 52 to perform wireless communication with the tractor 1, and transmits and receives various information to and from the tractor 1. For example, the terminal side communication unit 52 receives the finish level of each work position detected by the tractor 1 in the work travel, and stores the finish level in the terminal side storage unit 51.

The terminal side control device 50 operates as a field selection unit 55, a route creation unit 56, and a terminal side display control unit 57 by executing the program stored in the terminal side storage unit 51. The route creation unit 56 and the terminal side display control unit 57 are components that each realize the route setting step and the display step of the work method according to the present invention.

The field selection unit 55 manually or automatically selects a field that becomes the work target, sets the outer peripheral shape of the field, that is, the field outline, and stores the field outline in the terminal side storage unit 51. For example, the field selection unit 55 displays a field selection screen (not illustrated) on the display unit 53 for selecting a field that becomes the work target. When field information including the field outline is already stored in the terminal side storage unit 51, the field selection screen makes it possible to select the field corresponding to the field information. When one of the fields is selected on the field selection screen in response to a manual operation, the field selection unit 55 selects the field subjected to the selection operation as the work target, reads the field information corresponding to the selected field from the terminal side storage unit 51, and outputs the field information to the tractor 1 via the terminal side communication unit 52.

The field selection screen also allows an operation to create a new field. When an operation to create a new field is performed on the field selection screen, the field selection unit 55 selects a new field at the own vehicle position of the tractor 1 as the work target. Then, when the tractor 1 circulates along the outer peripheral shape of the new field and performs outer periphery travel, the field selection unit 55 receives from the tractor 1 the own vehicle position of the tractor 1 as positioned by the positioning unit 15 of the tractor 1, and records the position information of the outer peripheral shape of the new field and the position information of the route of the outer periphery travel. The field selection unit 55 creates the field outline of the new field based on the position information acquired in the outer periphery travel, creates field information including the field outline and stores the field information in the terminal side storage unit 51, and transmits the field information to the tractor 1 via the terminal side communication unit 52.

The route creation unit 56 creates the autonomous travel route 78 for autonomous travel of the field selected by the field selection unit 55, stores the autonomous travel route 78 in the terminal side storage unit 51, and transmits the autonomous travel route 78 to the tractor 1 via the terminal side communication unit 52. The autonomous travel route 78 includes travel information relating to the autonomous travel and work information relating to the plowing work. The travel information may include, in addition to the travel positions in the field, the traveling direction and the vehicle speed setting at each travel position. The work information may include information relating to the work at each travel position, such as whether plowing is activated or stopped, the rotation speed (rotational velocity) and the plowing height (depth). The route creation unit 56 creates, in the field, a plurality of straight routes in which plowing work is performed while traveling in the forward direction according to a travel pattern (reciprocating travel or circulating travel) selected by an operation of the mobile terminal 5, and creates an autonomous travel route 78 by combining the plurality of straight routes and a plurality of turning routes that connect the straight routes.

Furthermore, when the route creation unit 56 creates, in the field, an autonomous travel route 78 in which the current work travel is performed with respect to the already-worked region 76 of the previous work travel, the current autonomous travel route 78 is created based on the finish level detected from the already-worked region 76 of the previous work travel. When there is a work position in which the previous finish level is relatively low, the mobile terminal 5 may notify that the finish level is low by a warning in the form of a display or audio when displaying the current autonomous travel route 78 on the display unit 53.

For example, the route creation unit 56 creates the current autonomous travel route 78 along the travel route of the previous work travel. At this time, the current autonomous travel route 78 is created by setting the work information such that plowing work by the work machine 3 is stopped at the work positions where the previous finish level is sufficient, while plowing work by the work machine 3 is performed at the work positions where the previous finish level is relatively low. At this time, if an unworked region 77 of the previous work travel is remaining, the route creation unit 56 may correct the current autonomous travel route 78 to include the previous unworked region 77.

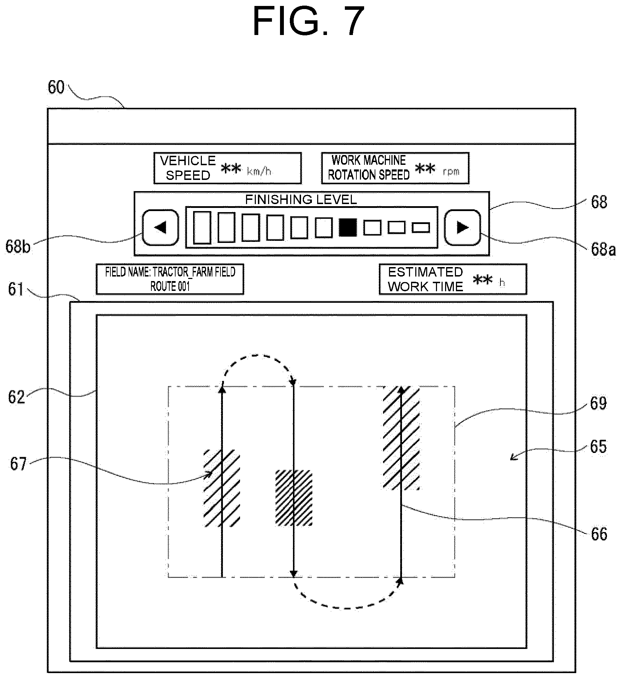

Alternatively, when the route creation unit 56 has created the travel route of the previous work travel so as to reciprocate a plurality of straight routes, as shown in FIG. 7, the current autonomous travel route 78 is created by omitting the straight routes in which the previous finish level is sufficient, and combines the straight routes in which the previous finish level is relatively low with turning routes. At this time, the traveling direction of the previous straight routes and the traveling direction of the current straight routes may be the same, or as shown in FIG. 7, they may be different. However, when the traveling directions are different, the mobile terminal 5 may notify that the traveling direction is different to the previous time by a warning in the form of a display or audio when displaying the current autonomous travel route 78 on the display unit 53. The route creation unit 56 may display, with respect to the straight routes in which the previous finish level is sufficient, a query screen on the display unit 53 that queries whether or not to set work information according to the finish level to the autonomous travel route 78, a query screen that queries an operator whether or not to omit the straight routes from the autonomous travel route 78, and a notification by audio guidance may also be provided.

When the autonomous travel mode is set, as shown in FIG. 8, the terminal side display control unit 57 controls the display unit 53 to display the work screen 70 for performing autonomous travel in the field. On the work screen 70, the terminal side display control unit 57 displays at least a map panel 71, as well as a work start button 72 that can be operated. Furthermore, on the work screen 70, the terminal side display control unit 57 displays a registered field name 73 based on the field information.

The terminal side display control unit 57 displays, in the map panel 71, a field outline 74 on the map based on the field information of the field selected by the field selection unit 55. Further, the terminal side display control unit 57 displays an own vehicle indicator 75 of the tractor 1 at the own vehicle position of the tractor 1 as positioned by the positioning unit 15 of the tractor 1. The terminal side display control unit 57 displays the already-worked region 76 and the unworked region 77 inside the area of the field outline 74 such that they can be discriminated. The terminal side display control unit 57 displays the autonomous travel route 78 created by the route creation unit 56 superimposed inside the area of the field outline 74, and also displays the travel path that has already been traveled by the tractor 1 such that it can be discriminated. The terminal side display control unit 57 may receive the actual vehicle speed and the actual rotation speed of the work machine 3 from the tractor 1 that is currently performing work travel, as well as the vehicle speed setting and the rotation speed setting that have been set, and display the information on the work screen 70. The terminal side display control unit 57 updates the position of the own vehicle indicator 75, the area of the already-worked region 76 and the unworked region 77, and the travel path according to the progress of the work travel by the tractor 1.

The terminal side display control unit 57 allows the work start button 72 to be selected and operated when a start condition of the autonomous travel is met, and does not allow the work start button 72 to be selected and operated when the start condition is not met. When the work start button 72 is selected and operated, the terminal side display control unit 57 transmits the field information and information relating to the autonomous travel route 78 together with a start instruction to the tractor 1. In response to the start instruction, the tractor 1 starts the autonomous travel along the autonomous travel route 78.

While the tractor 1 is performing autonomous travel, the terminal side display control unit 57 displays a work stop button (not illustrated) instead of the work start button 72 such that it can be selected and operated. When the work stop button is selected and operated, the terminal side display control unit 57 sends a stop instruction to the tractor 1. The tractor 1 ends the autonomous travel in response to the stop instruction. Furthermore, when the tractor 1 ends the autonomous travel, the terminal side display control unit 57 displays the work start button 72 instead of the work stop button.

As described above, the tractor 1, which is a work vehicle, includes the control device 13. The control device 13 operates as the travel control unit 45 and the work control unit 46 that perform work travel in a field, and the finish detection unit 47 (detection unit) that detects a finish level of the work at each work position of the field in which the work travel has been performed.

In other words, work method of the present invention of the tractor 1, which is a work vehicle, includes: a work travel step for causing the tractor 1 to perform work travel in a field; and a detection step for detecting a finish level of work at each work position in the field after performing the work travel.

This allows the tractor 1 to acquire the finish level of the work at each work position in the field, and it becomes possible to use the finish level for work travel in the field.

Furthermore, according to the present embodiment, the control device 13 of the tractor 1 operates as the display control unit 48, which displays the detected finish level on the finish confirmation screen 60 (display screen).

This allows the finish level of the work in the field to be presented to an operator, which enables an operator to perform work while confirming the finish level, and the finish level can also be confirmed after the work.

Moreover, according to the present embodiment, the display control unit 48 displays the already-worked region 64 of the field in which the work travel has been performed on the finish confirmation screen 60, and the work positions of the already-worked region 64 are displayed with the finish level detected at the work positions.

This allows an operator to perform work while confirming the finish level in the already-worked region 64, and the finish level in the already-worked region 64 can also be confirmed after the work.

Furthermore, according to the present embodiment, the display control unit 48 displays on the finish confirmation screen 60 the finishing level setting portion 68 that sets the finishing level that is planned as a work result of the work travel.

This allows the finishing level desired by an operator to be set, which makes it possible to realize the desired finish level in the field by the work travel of the tractor 1.

Also, according to the present embodiment, the travel control unit 45 controls the vehicle speed of the tractor 1 when the work travel is being performed based on the detected finish level.

This allows the vehicle speed of the tractor 1 to be controlled according to the detected finish level. Then, work that corrects the finish level can be performed, which enables the finish level to be improved.

In addition, according to the present embodiment, the work control unit 46 causes the work machine 3 provided in the tractor 1 to perform work when performing the work travel, and the rotation speed of the work machine 3 is controlled while performing the work travel based on the detected finish level.

This allows the rotation speed of the work machine 3 to be controlled according to the detected finish level. Then, work that corrects the finish level can be performed, which enables the finish level to be improved.

Furthermore, according to the present embodiment, the tractor 1 includes the mobile terminal 5, and the mobile terminal 5 includes the terminal side control device 50. The terminal side control device 50 operates as the route creation unit 56, which sets in the field, based on the finish level, the autonomous travel route 66 in which the current work travel is to be performed with respect to the already-worked region 64, in which the previous work travel was performed. Moreover, the travel control unit 45 and the work control unit 46 perform the current work travel by autonomous travel based on the autonomous travel route 66 that has been set.

This allows the previous finish level to be corrected in the current work travel, and the finish level can be improved.

Also, according to the present embodiment, the travel control unit 45 controls the vehicle speed at which the current autonomous travel is to be performed in the already-worked region 64 based on the finish level previously detected in the already-worked region 64.

This allows the previous finish level to be corrected in the current work travel by controlling the vehicle speed of the tractor 1, and the finish level can be improved.

In addition, according to the present embodiment, the work control unit 46 causes the work machine 3 provided in the tractor 1 to perform work when performing autonomous travel, and controls the rotation speed of the work machine 3 when performing the current autonomous travel in the already-worked region 64 based on the finish level previously detected in the already-worked region 64.

This allows the previous finish level to be corrected in the current work travel by controlling the rotation speed of the work machine 3, and the finish level can be improved.

Furthermore, according to the present embodiment, the display control unit 48 displays the finish level of the previous work on the finish confirmation screen 60.

This allows an operator to perform the current work travel while confirming and giving consideration to the finish level of the previous work.

Furthermore, according to the present embodiment, the work control unit 46 causes the plowing harrow provided in the tractor 1 to perform plowing work as the work machine 3 when performing the work travel. The finish detection unit 47 detects the finish level based on the rotation angle of the leveling plate 34 of the plowing harrow.

This allows the tractor 1 to detect the finish level of the plowing work. Further, an operator is able to confirm the finish level of the plowing work, and the finish level of the plowing work can be improved.

In the embodiment described above, an example has been described in which the finish map (finish distribution) 67 that shows the finish level of the work travel of the tractor 1 is displayed on the finish confirmation screen 60 on the display device 14 of the tractor 1. However, the present invention is not limited to this example. For example, in another example, the finish map (finish distribution) showing the finish level may be displayed, in the same manner as the finish confirmation screen 60, on the work screen 70 on the display unit 53 of the mobile terminal 5. Further, in the embodiment described above, an example has been described in which the finishing level setting portion 68, which is for setting a finishing level that is planned as the work result of work (plowing work) to be performed by the work machine 3 from now on, is displayed on the finish confirmation screen 60 on the display device 14 of the tractor 1 such that it can be operated. However, the present invention is not limited to this example. For example, in another example, the finishing level setting portion 68 may be displayed, in the same manner as the finish confirmation screen 60, on the work screen 70 on the display unit 53 of the mobile terminal 5.

In the embodiment described above, an example has been described in which the finish level of the work travel of the tractor 1 is displayed on the finish confirmation screen 60 and the work screen 70 by the finish map (finish distribution) 67. However, the present invention is not limited to this example. For example, in another example, the finish level of the work travel of the tractor 1 may be displayed on the finish confirmation screen 60 and the work screen 70 as characters or a numerical value, or work positions having a low finish level may be indicated by an icon or the like.

In the embodiment described above, an example has been described in which the finish detection unit 47 of the tractor 1 detects the finish level based on the rotation angle of the leveling plate 34, which is a detection result of the leveling plate rotation angle sensor 36. However, the present invention is not limited to this example. For example, in another example, the finish detection unit 47 may acquire field images taken of the field by a camera provided in the tractor 1, and detect the finish level based on an analysis result of the field images, or may detect the finish level by combining the analysis result of the field images and the detection result of the leveling plate rotation angle sensor 36.

In the embodiment described above, an example has been described in which the tractor 1 includes a plowing harrow as the work machine 3 and performs plowing work. However, the present invention is not limited to this example. For example, in another example, the tractor 1 may include a rotary as the work machine 3 and perform tillage work, or include another work machine and be configured to perform other types of work.

Furthermore, in the embodiment described above, an example has been described in which the terminal side control device 50 of the mobile terminal 5 operates as the route creation unit 56. However, in another example, the route creation unit 56 may operate as a server capable of connecting to the work vehicle such as the tractor 1, or the mobile terminal 5 via a network. In this case, the route information generated by the server may be configured to be transmitted to the work vehicle such as the tractor 1, or the mobile terminal 5. The mobile terminal 5 may be integrally provided inside the cabin 12 of the tractor 1 as an operation tool.

The present invention can be modified as appropriate to an extent not contradicting the gist or idea of the invention that can be read from the claims and the specification as a whole, and the work method, work vehicle and work system with such modifications are also included in the technical concept of the present invention.

### (Appendices to Invention)

Appended below is a summary of the invention extracted from the embodiment described above. The components and processing functions described in the appendices below may be selected and arbitrarily combined.

### <Appendix 1>

A work method of a work vehicle, comprising: a work travel step for causing the work vehicle to perform work travel in a field; and a detection step for detecting a finish level of work at each work position in the field after performing the work travel.

### <Appendix 2>

The work method according to appendix 1, further comprising a display step for displaying the detected finish level on a predetermined display screen.

### <Appendix 3>

The work method according to appendix 2, wherein in the display step, an already-worked region in the field, in which the work travel has been performed, is displayed on the display screen, and the work positions in the already-worked region are displayed together with the finish level detected at the work positions.

### <Appendix 4>

A work method according to any one of appendices 1 to 3, further comprising a setting step for setting a finishing level that is planned as a work result of the work travel.

### <Appendix 5>

A work method according to any one of appendices 1 to 4, wherein in the work travel step, a vehicle speed of the work vehicle when performing the work travel is controlled based on the detected finish level.

### <Appendix 6>

A work method according to any one of appendices 1 to 5, wherein in the work travel step, work is performed by a work machine provided in the work vehicle when performing the work travel, and a rotation speed of the work machine when performing the work travel is controlled based on the detected finish level.

### <Appendix 7>

A work method according to any one of appendices 1 to 6, further comprising: a route setting step for setting, with respect to an already-worked region in the field in which a previous work travel has been performed, a route in which a current work travel is to be performed based on the finish level; and an autonomous travel step for performing the current work travel by autonomous travel based on the route that has been set.

### <Appendix 8>

The work method according to appendix 7, wherein in the work travel step, a vehicle speed when performing a current autonomous travel in the already-worked region is controlled based on the finish level previously detected in the already-worked region.

### <Appendix 9>

A work method according to appendix 7 or 8, wherein in the autonomous travel step, work is performed by a work machine provided in the work vehicle when performing the autonomous travel, and a rotation speed of the work machine when performing a current autonomous travel in the already-worked region is controlled based on the finish level previously detected in the already-worked region.

### <Appendix 10>

A work method according to appendix 2 or 3, wherein in the display step, the finish level of a previous work is displayed.

### <Appendix 11>

A work method according to any one of appendices 1 to 10, wherein in the work travel step, plowing work is performed by a plowing harrow provided in the work vehicle when performing the work travel, and in the detection step, the finish level is detected based on a rotation angle of a leveling plate of the plowing harrow.

### REFERENCE SIGNS LIST

1 Tractor (work vehicle)
3 Work machine
5 Mobile terminal
13 Control device
14 Display device
34 Leveling plate
36 Leveling plate rotation angle sensor
45 Travel control unit
46 Work control unit
47 Finish detection unit (detection unit)
48 Display control unit
50 Terminal side control device
56 Route creation unit
60 Finish confirmation screen
67 Finish map
68 Finishing level setting portion

## Claims

1. A work method of a work vehicle, comprising:
a work travel step for causing the work vehicle to perform work travel in a field; and
a detection step for detecting a finish level of work at each work position in the field after performing the work travel.

2. The work method according to claim 1, further comprising a display step for displaying the detected finish level on a predetermined display screen.

3. The work method according to claim 2, wherein
in the display step, an already-worked region in the field, in which the work travel has been performed, is displayed on the display screen, and the work positions in the already-worked region are displayed together with the finish level detected at the work positions.

4. The work method according to claim 1 or 2, further comprising a setting step for setting a finishing level that is planned as a work result of the work travel.

5. The work method according to claim 1 or 2, wherein
in the work travel step, a vehicle speed of the work vehicle when performing the work travel is controlled based on the detected finish level.

6. The work method according to claim 1 or 2, wherein
in the work travel step, work is performed by a work machine provided in the work vehicle when performing the work travel, and a rotation speed of the work machine when performing the work travel is controlled based on the detected finish level.

7. The work method according to claim 1 or 2, further comprising:
a route setting step for setting, with respect to an already-worked region in the field in which a previous work travel has been performed, a route in which a current work travel is to be performed, based on the finish level; and
an autonomous travel step for performing the current work travel by autonomous travel based on the route that has been set.

8. The work method according to claim 7, wherein
in the work travel step, a vehicle speed when performing a current autonomous travel in the already-worked region is controlled based on the finish level previously detected in the already-worked region.

9. The work method according to claim 7, wherein
in the autonomous travel step, work is performed by a work machine provided in the work vehicle when performing the autonomous travel,
and a rotation speed of the work machine when performing a current autonomous travel in the already-worked region is controlled based on the finish level previously detected in the already-worked region.

10. The work method according to claim 2, wherein
in the display step, the finish level of a previous work is displayed.

11. The work method according to claim 1 or 2, wherein
in the work travel step, plowing work is performed by a plowing harrow provided in the work vehicle when performing the work travel, and
in the detection step, the finish level is detected based on a rotation angle of a leveling plate of the plowing harrow.

12. A work vehicle comprising:
a travel control unit and a work control unit that perform work travel in a field; and
a detection unit that detects a finish level of work at each work position in the field after performing the work travel.

13. A work system of a work vehicle, comprising:
a travel control unit and a work control unit that perform work travel in a field; and
a detection unit that detects a finish level of work at each work position in the field after performing the work travel.
